(19) Europäisches Patentamt
European Patent Office
Office européen des brevets

(11) **EP 3 422 551 A1**

(12) **EUROPEAN PATENT APPLICATION**
published in accordance with Art. 153(4) EPC

(43) Date of publication:
**02.01.2019 Bulletin 2019/01**

(21) Application number: **16897075.4**

(22) Date of filing: **13.12.2016**

(51) Int Cl.:
*H02M 7/48* *(2007.01)*          *H02M 7/12* *(2006.01)*
*F25B 1/00* *(2006.01)*

(86) International application number:
**PCT/JP2016/087058**

(87) International publication number:
**WO 2017/168859 (05.10.2017 Gazette 2017/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **29.03.2016 JP 2016065524**

(71) Applicant: **Hitachi-Johnson Controls Air
Conditioning, Inc.
Tokyo 105-0022 (JP)**

(72) Inventors:
• **LI, Dongsheng
Tokyo 100-8280 (JP)**
• **IWAJI, Yoshitaka
Tokyo 100-8280 (JP)**
• **NOTOHARA, Yasuo
Tokyo 100-8280 (JP)**
• **YAMAMOTO, Yuuji
Tokyo 105-0022 (JP)**

(74) Representative: **MERH-IP Matias Erny Reichl
Hoffmann
Patentanwälte PartG mbB
Paul-Heyse-Strasse 29
80336 München (DE)**

(54) **POWER CONVERSION DEVICE, MOTOR DRIVE DEVICE, AND REFRIGERATOR USING SAME**

(57)    The purpose of the present invention is to suppress current distortion due to load-side AC voltage, magnetic saturation (nonlinear) characteristics of a motor, etc., in a power conversion device and a motor drive device. A power conversion device for performing power conversion between an AC power supply and a DC loader between DC power supplies is provided with: an inverter circuit; a current detection means for detecting the AC current of the AC power supply; a voltage controller for generating a command voltage for the inverter circuit on the basis of an AC current signal detected by the current detection means; and a correction unit having a gain with respect to a specific frequency and correcting the command voltage on the basis of the AC current signal. The correction unit is configured to correct the command voltage that has been output from the voltage controller.

F I G . 1

EP 3 422 551 A1

**Description**

Technical Field

The present invention relates to a power conversion device, a motor drive device, and a refrigerator using the same and more particularly to a technology that enables a power conversion device or a motor drive device including an inverter circuit to reduce current distortion due to distortion of alternating voltages or non-linear characteristics of the inverter circuit.

Background Art

A so-called inverter circuit that transforms direct-current voltage into alternating-current voltage is widely used for uninterruptible power-supply systems, grid connected power converters, or alternating-current motor drive devices.
Generally, the inverter circuit used for these applications is voltage-based and controls an output current by adjusting an output voltage. Therefore, a distortion component in an alternating voltage at the load side (system voltage or motor-induced voltage) accordingly generates distortion of similar components in an alternating current. Moreover, distortion easily occurs around the peak of an alternating current due to magnetic saturation characteristics (non-linear) of a reactor or a motor. The inverter circuit itself contains non-linear characteristics such as a correction error in the dead time or voltage drop in a semiconductor power device and therefore causes current distortion. Distortion of an output current from the inverter circuit cause issues such as increasing losses in the reactor, generating pulsation in the motor torque, and increasing power line harmonics, for example.
It may be possible to improve the current distortion due to alternating voltage distortion if the alternating voltage distortion is detected and proper control is provided. However, high-precision voltage detection means is required, increasing costs. In addition, it is difficult to detect an induced voltage while the motor is driven.
Japanese Patent Application Laid-Open No. 5049707 (PTL 1) is available as a background art in the technical field. PTL 1 discloses a technique of improving the accuracy of correcting the dead time of an inverter circuit and reducing the current distortion.

Citation List

Patent Literature

PTL 1: Japanese Patent Application Laid-Open No. 5049707

Summary of Invention

Technical Problem

The method described in PTL 1 can highly accurately correct the dead time by using a special-purpose voltage detection circuit and a specific semiconductor integrated circuit (microcomputer) capability. However, a defect is the need for the microcomputer having special-purpose functions and an additional circuit.
It is therefore an object of the present invention to provide a power conversion device, a motor drive device, and a refrigerator using the same capable of suppressing current distortion without the need for additional circuits.

Solution to Problem

In order to solve the abovementioned issue, the present invention provides a power conversion device, as an example, that performs power conversion between an alternating-current source and a direct-current load or a direct-current power supply and includes an inverter circuit, current detection means, a voltage controller, and a corrector. The current detection means detects an alternating current from the alternating-current source. The voltage controller generates a command voltage for the inverter circuit based on an alternating-current signal detected by the current detection means. The corrector includes a gain corresponding to a specific frequency and corrects the command voltage based on the alternating-current signal. The corrector is configured to correct the command voltage after output from the voltage controller.

Advantageous Effects of Invention

The present invention can provide a power conversion device, a motor drive device, and a refrigerator using the same capable of suppressing current distortion. Brief Description of Drawings

Figure 1 is a configuration diagram illustrating a power conversion device according to Example 1.
Figure 2 is a control function block configuration diagram illustrating the power conversion device according to Example 1.
Figure 3 is a function block diagram illustrating a voltage controller in the power conversion device according to Example 1.
Figure 4 is a function block diagram illustrating a power conversion device in the power conversion device according to Example 1.
Figure 5 is a diagram illustrating a transfer function and gain characteristics of an S controller according to Example 1.
Figure 6 illustrates a current waveform and a command voltage waveform of the power conversion device according to Example 1.
Figure 7 is a configuration diagram illustrating a motor drive device according to Example 2.
Figure 8 is a control function block configuration diagram illustrating the motor drive device according to Example 2.
Figure 9 illustrates a control axis and a motor rotation axis of the motor drive device according to Example 2.
Figure 10 is a function block diagram illustrating a speed-phase estimator of the motor drive device according to Example 2.
Figure 11 is a current waveform of the motor drive device according to Example 2.
Figure 12 is a configuration diagram illustrating a refrigerator according to Example 3.

Description of Embodiments

Examples of the present invention will be described with reference to the accompanying drawings.

Example 1

The present example will describe the power conversion device.

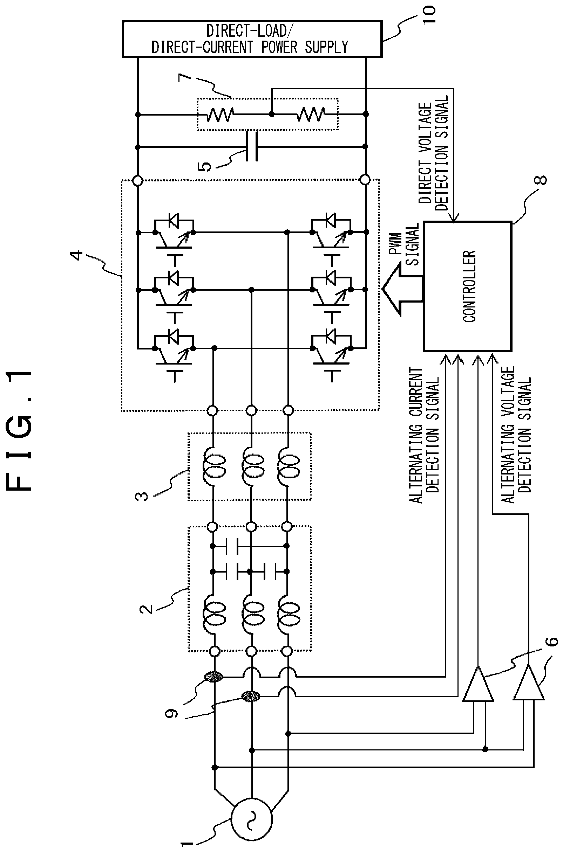

Figure 1 is an overall configuration diagram of the power conversion device according to the present example. As illustrated in Figure 1, the power conversion device includes a noise filter 2, a reactor 3, an inverter circuit 4, a smoothing capacitor 5, voltage detection means 6, a voltage-dividing resistor (voltage detection means) 7, a controller 8, and current detection means 9. The noise filter 2 is connected to an alternating-current source 1 in series. The inverter circuit 4 includes a semiconductor switching device. The smoothing capacitor 5 is connected between a positive electrode and a negative electrode at the direct current side of the inverter circuit 4. The voltage detection means 6 detects an alternating voltage. The voltage-dividing resistor (voltage detection means) 7 detects a direct voltage. The controller 8 performs PWM (pulse width modulation) control on the inverter circuit 4. The current detection means 9 detects an alternating current. The alternating current side of the power conversion device is connected to the alternating-current source 1. The direct current side of the power conversion device is connected to a direct load or direct-current power supply (direct-load/direct-current power supply) 10.
The description below explains operation modes of the inverter circuit 4. The operation modes include a rectification mode (alternating-direct conversion mode) and a regeneration mode (direct-alternating conversion mode). The rectification mode receives alternating-current power from the alternating-current source 1 and supplies direct-current power to the direct-load/direct-current power supply 10. The regeneration mode reversely converts direct-current power from the direct-load/direct-current power supply 10 and outputs alternating-current power to the alternating-current source 1. A control signal from the controller 8 switches the operation modes between the rectification mode and the regeneration mode (inverter mode). Means to provide a direct-current power supply in the direct-load/direct-current power supply 10 include an unshown solar energy generation facility or storage battery as needed.
The inverter circuit 4 includes six semiconductor switching devices (IGBTs (Insulated Gate Bipolar Transistors) in the present example) and diodes connected to the semiconductor switching devices in inverse parallel to configure a three-phase bridge circuit. The three-phase bridge circuit corresponds to the three-phase alternating-current source 1. Each diode connected to each semiconductor switching device in inverse parallel is used for commutation when the semiconductor switching device is turned off. The diode belongs to known basic configurations of inverter circuits. A detailed description of the diode is therefore omitted.
The smoothing capacitor 5 provides an element that suppresses a ripple and a surge voltage in the direct voltage at the direct current side of the inverter circuit 4.
The controller 8 favorably uses an arithmetic processing unit such as a microcomputer or DSP (Digital Signal Processor), for example. A sampling hold circuit and an A/D (Analog/Digital) converter included in the controller 8 convert a detection signal from each voltage or current into a digital signal.

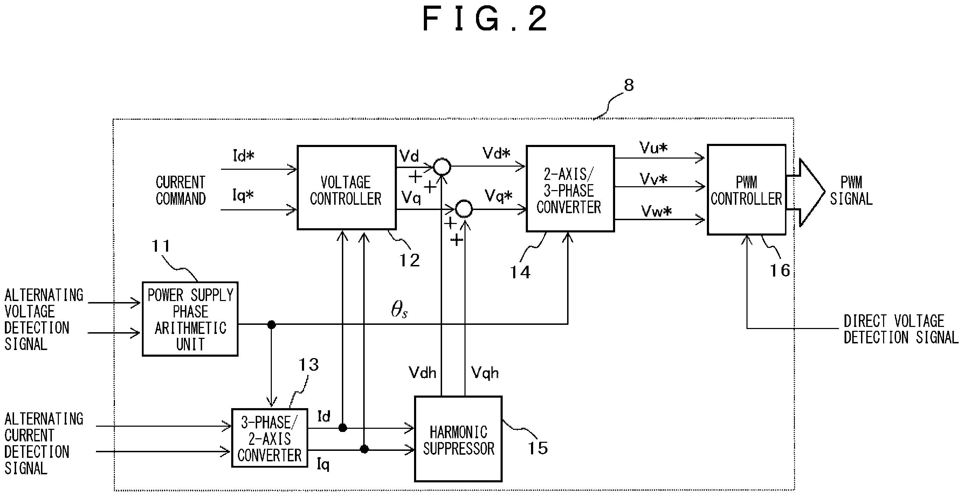

Figure 2 is a block diagram illustrating a control configuration of the controller illustrated in Figure 1. The controller 8 illustrated in Figure 2 allows the arithmetic processing unit to execute a specified program and thereby operates to calculate a voltage command for the inverter circuit and generate a PWM control signal to provide switching (on/off) control for the semiconductor switching devices of the inverter circuit.

In more detail, as illustrated in Figure 2, the controller 8 includes a power supply phase arithmetic unit 11, a voltage controller 12, a 3-phase/2-axis converter 13, a 2-axis/3-phase converter 14, a harmonic suppressor 15, and a PWM controller 16.

The power supply phase arithmetic unit 11 is supplied with an alternating voltage detection signal, calculates a power-supply voltage phase ($\theta$s), and outputs a result to the 3-phase/2-axis converter 13 and the 2-axis/3-phase converter 14.

The 3-phase/2-axis converter 13 calculates d-axis current Id and q-axis current Iq by using equations (1) and (2) as follows based on: alternating current detection signals (Iu, Iv) detected by the current detection means 9 to detect two phases of currents out of three-phase alternating currents; and the power-supply voltage phase ($\theta$s) calculated by the power supply phase arithmetic unit 11. Equation (1) represents an arithmetic equation for 3-phase/2-axis conversion and equation (2) represents an arithmetic equation for conversion into a rotating system of coordinates.

[Math. 1]

$$\begin{pmatrix} I_\alpha \\ I_\beta \end{pmatrix} = \frac{2}{3} \begin{pmatrix} 1 & -\cos(\pi/3) & -\cos(\pi/3) \\ 0 & \cos(\pi/6) & -\cos(\pi/6) \end{pmatrix} \begin{pmatrix} I_u \\ I_v \\ -(I_u + I_v) \end{pmatrix} \quad \cdots (1)$$

[Math. 2]

$$\begin{pmatrix} I_d \\ I_q \end{pmatrix} = \begin{pmatrix} \cos(\theta_s) & \sin(\theta_s) \\ -\sin(\theta_s) & \cos(\theta_s) \end{pmatrix} \begin{pmatrix} I_\alpha \\ I_\beta \end{pmatrix} \quad \cdots (2)$$

The voltage controller 12 calculates d-axis voltage command value Vd and q-axis voltage command value Vq by using a proportional integral (PI) controller in order to eliminate errors between a set of d-axis current command value Id* and q-axis current command value Iq* and a set of d-axis current detection value Id and q-axis current detection value Iq found by the 3-phase/2-axis converter 13, respectively.

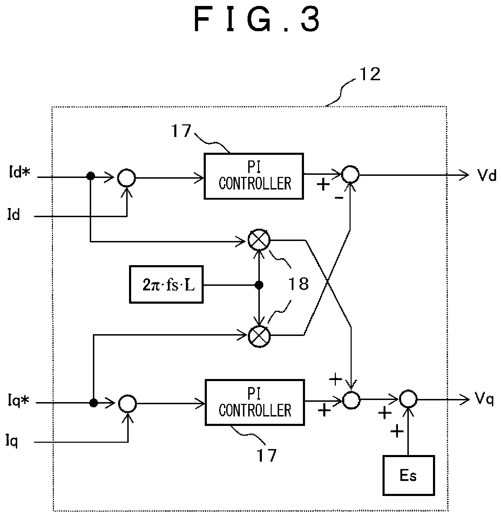

Figure 3 illustrates an internal configuration of the voltage controller 12. A PI controller 17 processes a current error to adjust the voltage command. Feed forward terms ($2\pi$fs$\times$L$\times$Id*, $2\pi$fs$\times$L$\times$Iq*, and Es) are added to (subtracted from) the corresponding voltage commands in order to improve control responsiveness and stability. In the terms, fs signifies the power supply frequency, L signifies the inductance value of the reactor 3, and Es signifies the effective value of an alternating-current source voltage.

According to the control configuration illustrated in Figure 3, however, the PI controller ensures a response frequency of several tens of hertz in order to maintain the stability of the control system, providing an insufficient effect of suppressing high-frequency disturbance components of several hundreds of hertz. For example, a three-phase power supply concerns a fifth-order component (frequency of 250Hz (50Hz power supply) or 300Hz (60Hz power supply)) and a seventh-order component (frequency of 350Hz (50Hz power supply) or 420Hz (60Hz power supply)) as major power supply voltage distortions. It is therefore difficult only for the control illustrated in Figure 3 to suppress the fifth-order and seventh-order current distortions.

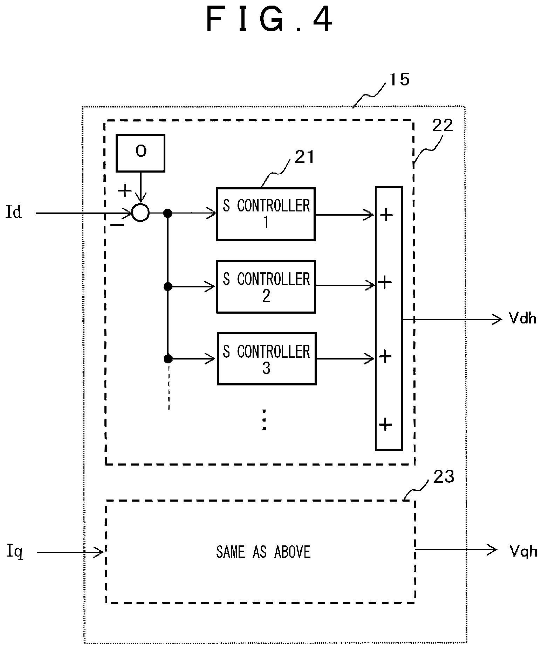

The present example adds the harmonic suppressor 15 in order to suppress high-order harmonic components in an alternating current. Figure 4 is a detailed configuration diagram illustrating the harmonic suppressor 15.

The harmonic suppressor 15 suppresses alternating-current components at specific frequencies in d-axis current detection value Id and q-axis current detection value Iq and includes a plurality of S controllers 21. The S controller 21 is comparable to an oscillator to remove harmonic components from current components.

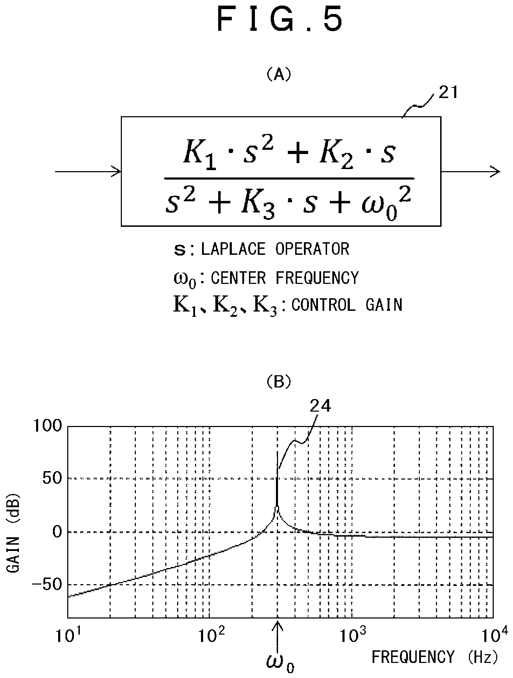

The S controller will be described with reference to Figure 5. Figure 5 illustrates a transfer function and gain characteristics of the S controller 21. As seen from gain characteristics 24 in Figure 5(B), the S controller is characterized by a large gain at a specific center frequency ($\omega_0$).

As illustrated in Figure 5(A), the transfer function of the S controller 21 is provided with three gains ($K_1$, $K_2$, and $K_3$). Adjusting these gains can adjust a gain size, a bandwidth, and phase characteristics corresponding to the specific center frequency ($\omega_0$). The center frequency is set based on a high-order component in an alternating-current signal detected by the current detection mean.

As illustrated in Figure 4, input to each S controller equals a difference between the command value (=0) and one of d-axis current detection value Id and q-axis current detection value Iq. Due to the gain characteristics 24 illustrated in Figure 5(B), output from each S controller contains an opposite-phase version of only the component of the center frequency ($\omega_0$) set for the transfer function of the S controller. Harmonic components can be therefore canceled by adding d-axis voltage command value Vd and q-axis voltage command value Vq as outputs from the voltage controller 12 to opposite-phase harmonic components found by the harmonic suppressor 15 illustrated in Figure 2. Namely, the harmonic suppressor 15 works as a corrector that corrects a voltage command value based on an alternating-current signal. The abovementioned configuration cancels harmonic components by adding opposite-phase harmonic components. However, the same-phase harmonic components may be subtracted.

In the three-phase alternating-current system, fifth-order and seventh-order components of the power supply frequency constitute major components of the alternating-current distortion. Sixth-order components therefore appear in d-axis current detection value Id and q-axis current detection value Iq converted by the 3-phase/2-axis converter 13. Fifth-order and seventh-order components of an alternating current can be therefore suppressed by providing the harmonic suppressor 15 with the S controller having a frequency ($\omega_0 = 2\pi \times \mathrm{fs} \times 6$) corresponding to the sixth order of the power supply frequency. The effect of improving the current distortion can be further improved by similarly supplementing 11th-order and 13th-order frequency components with the S controller having a frequency ($\omega_0 = 2\pi \times \mathrm{fs} \times 12$) corresponding to the 12th order of the power supply frequency. As above, a plurality of S controllers may be used together when a plurality of high-order components are contained in an alternating-current signal detected by the current detection means. Adding the S controller corresponding to a ripple frequency of the direct voltage can similarly improve the current distortion due to a direct voltage ripple of the direct-load/direct-current power supply 10.

The 2-axis/3-phase converter 14 reversely converts voltage commands by using the sum of d-axis and q-axis voltage command values (namely, d-axis voltage command value Vd* and q-axis voltage command value Vq*) found by the voltage controller 12 and the harmonic suppressor 15 and the power-supply voltage phase ($\theta$s) found by the power supply phase arithmetic unit 11 based on equation (3) and equation (4) shown below, calculates three-phase voltage command values (Vu*, Vv*, and Vw*), and outputs them to the PWM controller 16. Equation (3) represents an arithmetic equation for conversion into the fixed system of coordinates from the rotating system of coordinates. Equation (4) represents an arithmetic equation for 2-axis/3-phase conversion.

[Math. 3]

$$\begin{pmatrix} V_\alpha \\ V_\beta \end{pmatrix} = \begin{pmatrix} \sin(\theta_s) & \cos(\theta_s) \\ -\cos(\theta_s) & \sin(\theta_s) \end{pmatrix} \begin{pmatrix} V_d^* \\ V_q^* \end{pmatrix} \quad \cdots (3)$$

[Math. 4]

$$\begin{pmatrix} V_u^* \\ V_v^* \\ V_w^* \end{pmatrix} = \begin{pmatrix} \cos(0) & \sin(0) \\ \cos(2\pi/3) & \sin(2\pi/3) \\ \cos(4\pi/3) & \sin(4\pi/3) \end{pmatrix} \begin{pmatrix} V_\alpha \\ V_\beta \end{pmatrix} \quad \cdots (4)$$

The PWM control portion 16 generates a PWM control signal based on the three-phase voltage command values (Vu*, Vv*, and Vw*) from the 2-axis/3-phase converter 14, a direct voltage detection signal (Edc), and a triangular or sawtooth carrier wave, allows the semiconductor switching devices of the inverter circuit 4 to perform switching operation, and controls an output voltage from the inverter circuit 4.

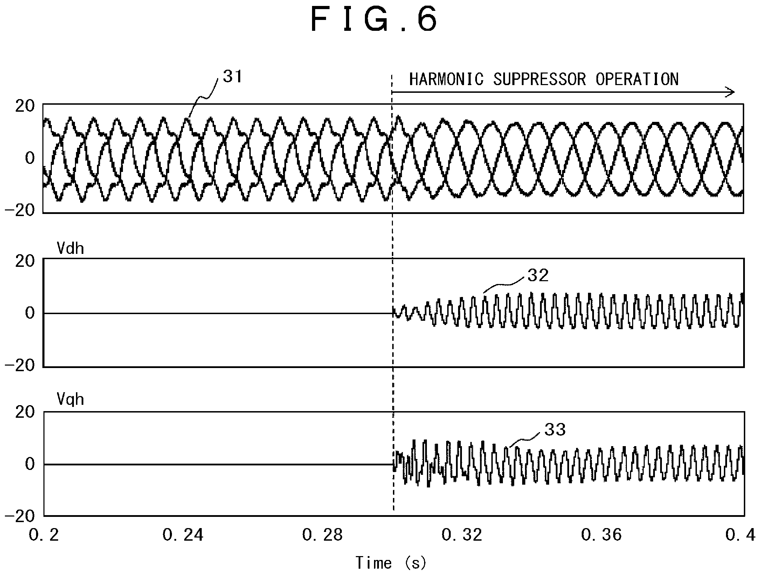

Figure 6 illustrates waveforms representing an effect of the abovementioned harmonic suppressor 15 to improve the current distortion. The harmonic suppressor 15 according to the present example turns on from 0.3s on the time axis. The harmonic suppressor 15 outputs a d-axis voltage correction amount waveform (Vdh) 32 and a q-axis voltage correction amount waveform (Vqh) 33 to adjust d-axis voltage command value Vd* and q-axis voltage command value Vq*. As a result, it is possible to confirm improvement of the distortion in the current waveform 31 (the current immediately after the alternating-current source 1 in Figure 1).

As above, the present example provides the power conversion device that performs power conversion between the alternating-current source and the direct-current load or the direct-current power supply and includes the inverter circuit, the current detection means, the voltage controller, and the corrector. The current detection means detects an alternating current from the alternating-current source. The voltage controller generates a command voltage for the inverter circuit based on an alternating-current signal detected by the current detection means. The corrector includes a gain corresponding to a specific frequency and corrects the command voltage based on the alternating-current signal.

The corrector is configured to correct the command voltage after output from the voltage controller.

Namely, the current control system for the inverter circuit is supplemented with the control means using the transfer function having a large gain corresponding to the predetermined frequency component and corrects the command voltage corresponding to a specific high-order component. It is therefore possible to provide the power conversion device capable of suppressing the current distortion without need for an additional circuit.

Example 2

The present example describes the motor drive device.

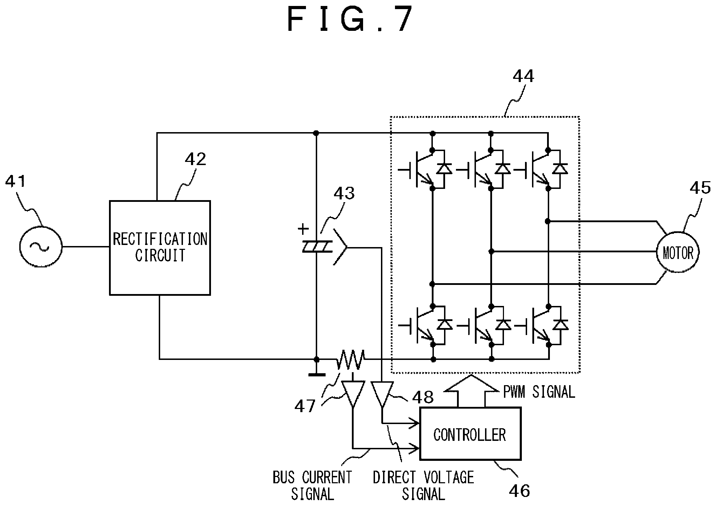

Figure 7 is a diagram illustrating an overall configuration of the motor drive device according to the present example. In Figure 7, the motor drive device according to the present example includes a rectification circuit 42 that is connected to an alternating-current source 41 and converts an alternating voltage from the alternating-current source 41 into a direct voltage. A smoothing capacitor 43 is connected to a direct-current output terminal of the rectification circuit 42 and smoothes a direct voltage as output from the rectification circuit 42. An inverter circuit 44 converts a direct voltage as output from the smoothing capacitor 43 into an alternating voltage to be output and variably drives the rotating speed of a motor 45. The rectification circuit 42 may be omitted when the power is supplied from a direct-current power supply such as a storage battery.

A current detection circuit 47 detects a direct current (bus current) from the inverter circuit 44 by using a shunt resistance provided between the smoothing capacitor 43 and the inverter circuit 44. The motor drive device further includes a controller 46 to control the inverter circuit 44 and a direct voltage detection circuit 48. The controller 46 uses a semiconductor arithmetic element such as a microcomputer or a DSP (digital signal processor).

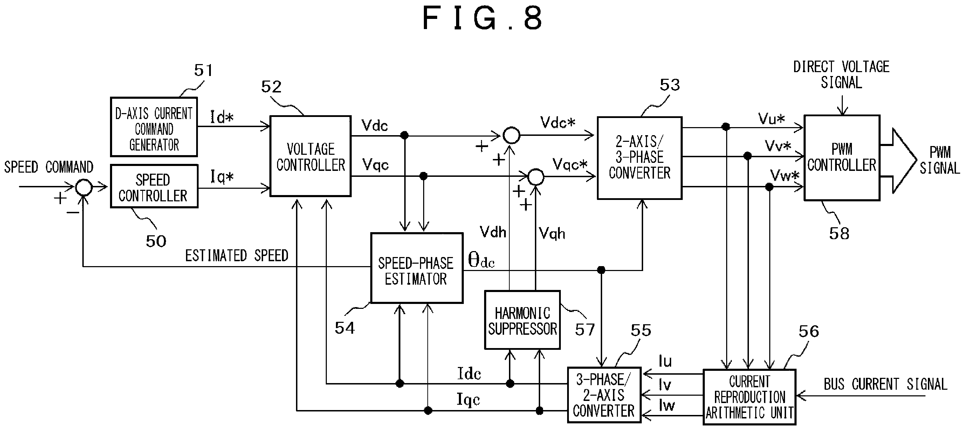

Figure 8 is a diagram illustrating a control configuration of the controller 46 that controls the inverter circuit 44. A CPU (computer) and an arithmetic program implement functions. The controller 46 calculates a voltage command signal applied to the motor 45 under dq vector control and generates a PWM control signal for the inverter circuit 44. As illustrated in Figure 8, the controller includes a speed controller 50, a d-axis current command generator 51, a voltage controller 52, a 2-axis/3-phase converter 53, a speed-phase estimator 54, a 3-phase/2-axis converter 55, a current reproduction arithmetic unit 56, a harmonic suppressor 57, and a PWM controller 58.

The current reproduction arithmetic unit 56 reproduces output currents Iu, Iv, and Iw from the inverter circuit 44 by using a detection signal (Ish) output from the current detection circuit 47 and the three-phase voltage command values Vu*, Vv*, and Vw*. The example uses the technique to reproduce the three-phase current from the bus current in order to reduce costs. However, the current detection means such as a current sensor may be used to detect an alternating current as output from the inverter circuit 44.

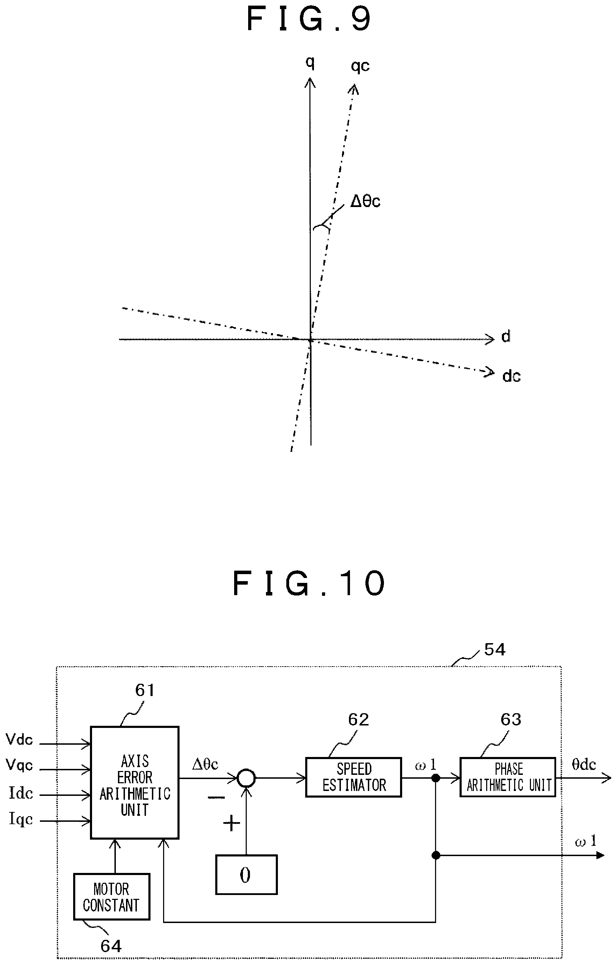

Figure 9 is a drawing illustrating a control axis and a motor rotation axis of the motor drive device according to the present example. A dc-qc axis is defined as an estimation axis for the control system, a d-q axis is defined as the motor rotation axis, and an axis error between the d-q axis and the dc-qc axis is defined as $\Delta\theta c$. The 3-phase/2-axis converter 55 calculates dc-axis current Idc and qc-axis current Iqc based on the reproduced three-phase output currents Iu, Iv, and Iw and phase information $\theta_{dc}$ estimated by the speed-phase estimator 54 by using equation (5) and equation (6).
[Math. 5]

$$\begin{pmatrix} I_\alpha \\ I_\beta \end{pmatrix} = \frac{2}{3}\begin{pmatrix} \cos(0) & \cos(2\pi/3) & \cos(4\pi/3) \\ \sin(0) & \sin(2\pi/3) & \sin(4\pi/3) \end{pmatrix}\begin{pmatrix} I_u \\ I_v \\ I_w \end{pmatrix} \quad \cdots (5)$$

[Math. 6]

$$\begin{pmatrix} I_{dc} \\ I_{qc} \end{pmatrix} = \begin{pmatrix} \cos(\theta_{dc}) & -\sin(\theta_{dc}) \\ \sin(\theta_{dc}) & \cos(\theta_{dc}) \end{pmatrix}\begin{pmatrix} I_\alpha \\ I_\beta \end{pmatrix} \quad \cdots (6)$$

The speed controller 50 generates a q-axis current command value (iqc*) based on a speed command value (ω*) from outside. The d-axis current command generator 51 generates a d-axis current command value (idc*) in order to minimize a motor current.

The voltage controller 52 calculates dc-axis voltage command value Vdc and qc-axis voltage command value Vqc by using current command value Idc* supplied from the d-axis current command generator 51, current command value Iqc* supplied from the speed controller 50, dc-axis current detection value Idc, qc-axis current detection value Iqc, speed command value ω1*, and a motor constant. This voltage control belongs to the known basic configuration of motor control and a detailed description is omitted.

The description below explains in detail a method of estimating speeds and phases in order to provide motor position sensorless control.

Figure 10 is a detailed block diagram of the speed-phase estimator 54 in Figure 8. The speed-phase estimator 54 estimates rotor positions and rotating speeds based on a motor rotor position sensorless control method. Specifically, the speed-phase estimator 54 includes an axis error arithmetic unit 61, a speed estimator 62, and a phase arithmetic unit 63. The axis error arithmetic unit 61 calculates an axis error between a motor axis (d-q axis) and a control system axis (dc-qc axis). The speed estimator 62 estimates a motor rotating speed.

The axis error arithmetic unit 61 calculates an axis error ($\Delta\theta c$) based on the dc-axis voltage command value (Vdc), the qc-axis command voltage value (Vqc), the dc-axis current value (idc), the qc-axis current value (iqc), a motor constant 64 (winding resistance (r), d-axis inductance (Ld), q-axis inductance (Lq)), and a motor rotating speed estimation value ($\omega1$) by using equation (7) shown below.

[Math. 7]

$$\Delta\theta c = \tan^{-1}\left(\frac{Vdc - r \times Idc + \omega1 \times Lq \times Iqc}{Vqc - r \times Iqc - \omega1 \times Ld \times Idc}\right) \quad \cdots (7)$$

The speed estimator 62 processes the axis error ($\Delta\theta c$) output from the axis error arithmetic unit 61 by using a so-called PI controller and outputs the estimation value ($\omega1$) for the motor rotating speed. The PI controller provides PLL (Phase-Locked Loop) control to eliminate an estimated axis error ($\Delta\theta c$) between the motor axis (d-q axis) and the control system axis (dc-qc axis). The phase arithmetic unit 63 integrates the estimated motor rotating speed ($\omega1$) to calculate the control system phase ($\theta_{dc}$).

The speed-phase estimator 54 can eliminate a rotor position sensor for the motor 45 and can therefore reduce costs in the entire driving system. Obviously, a rotor position sensor such as an encoder may be used to always detect rotor speeds and position information.

The harmonic suppressor 57 provides control to suppress harmonic components in a motor current. The harmonic suppressor 57 is configured similarly to the harmonic suppressor 15 as illustrated in Figure 4 according to Example 1. Though a detailed description is omitted, the harmonic suppressor 57 suppresses an alternating-current component at a specific frequency in dc-axis current Idc and qc-axis current Iqc of the motor and is configured by a plurality of the S controllers 21 in parallel. The center frequency for each S controller is adjusted in accordance with the motor speed, the inverter frequency (f1), and inverter characteristics. Regarding a three-phase alternating-current motor, for example, fifth-order and seventh-order components of the power supply frequency constitute major components of the motor current distortion. Sixth-order components of the inverter frequency therefore appear in dc-axis current detection value Idc and qc-axis current detection value Iqc converted by the 3-phase/2-axis converter 55. Fifth-order and seventh-order components of a motor current can be therefore suppressed by providing the harmonic suppressor 57 with the S controller having a frequency ($\omega_0 = 2\pi \times f1 \times 6$) corresponding to the sixth order of the inverter frequency. Obviously, the S controller may be similarly added in terms of 11th-order or higher frequency components in order to advance the effect of improving the current distortion. Adding the S controller corresponding to a ripple frequency of the direct voltage can similarly suppress current distortion components due to the direct voltage ripple of the smoothing capacitor 43.

Output (Vdh and Vqh) from the harmonic suppressor 57 is added to output (Vdc and Vqc) from the voltage controller 52 to calculate motor voltage commands (Vdc* and Vqc*).

Output (Vdh and Vqh) from the harmonic suppressor 57 mainly contains harmonic (alternating current) components, therefore decreasing alternating-current components in output (Vdc and Vqc) from the voltage controller 52. As a result, it is possible to reduce a ripple in the axis error ($\Delta\theta c$) calculated by equation (7) and improve the stability of the motor control system. Namely, the stability of the motor control system can be improved by performing the axis error operation on output from the voltage controller 52 before output from the harmonic suppressor 57 and output from the voltage controller 52 are added.

The 2-axis/3-phase converter 53 calculates three-phase command voltages (Vu*, Vv*, and Vw*) by using the calculated motor voltage commands (Vdc* and Vqc*) and the phase information ($\theta$dc) from the speed-phase estimator 54 based on equation (8) and equation (9) shown below.

[Math. 8]

$$\begin{pmatrix} V_\alpha \\ V_\beta \end{pmatrix} = \begin{pmatrix} \sin(\theta_{dc}) & \cos(\theta_{dc}) \\ -\cos(\theta_{dc}) & \sin(\theta_{dc}) \end{pmatrix} \begin{pmatrix} V_{dc}^* \\ V_{qc}^* \end{pmatrix} \quad \cdots (8)$$

[Math. 9]

$$\begin{pmatrix} V_u^* \\ V_v^* \\ V_w^* \end{pmatrix} = \begin{pmatrix} \cos(0) & \sin(0) \\ \cos(2\pi/3) & \sin(2\pi/3) \\ \cos(4\pi/3) & \sin(4\pi/3) \end{pmatrix} \begin{pmatrix} V_\alpha \\ V_\beta \end{pmatrix} \quad \cdots (9)$$

Finally, the PWM controller 58 calculates a modulation percentage by using a direct voltage signal (Ed) from the direct voltage detection circuit 48 to generate a PWM control signal for the inverter circuit 44. The semiconductor switching devices (such as IGBT and power MOS) of the inverter circuit 4 turn on or off in accordance with the PWM control signal and each output a pulsed voltage (having the amplitude value varying with the direct voltage and the width varying with the PWM signal) from the output terminals corresponding to the phases.

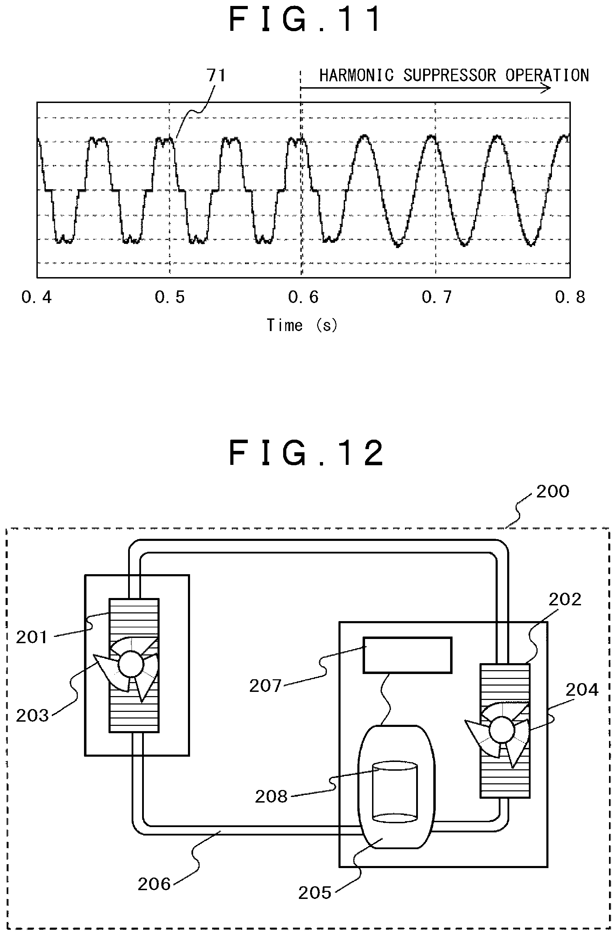

Figure 11 illustrates a waveform showing an effect of the abovementioned harmonic suppressor 57 to improve the motor current distortion. It is possible to confirm that the harmonic suppression according to the present example greatly suppresses distortion components in a U-phase current waveform 71 of the motor at 0.6s and later on the time axis.

As above, the present example provides the motor drive device including the inverter circuit to convert a direct voltage into an alternating voltage and the current detection means to detect an alternating current as output from the inverter circuit. There are provided the voltage controller to generate a command voltage for the inverter circuit based on an alternating-current signal detected by the current detection means and the corrector to include a gain corresponding to a specific frequency and correct the command voltage based on the alternating-current signal. The corrector is configured to correct the command voltage after output from the voltage controller.

Namely, the current control system for the inverter circuit is supplemented with the control means using the transfer function having a large gain corresponding to the predetermined frequency component and corrects the command voltage corresponding to a specific high-order component. It is therefore possible to provide the power drive device capable of suppressing the current distortion without need for an additional circuit.

Example 3

The present example will describe a refrigerator.

Figure 12 is a configuration diagram illustrating the refrigerator according to the present example such as an air conditioner or a freezing machine. A refrigerator 200 conditions the air temperature and includes outdoor equipment and indoor equipment connected each other through a refrigerant pipe fitting 206. The outdoor equipment includes an outdoor heat exchanger 202, an outdoor fan 204, and a compressor 205. The outdoor heat exchanger 202 performs heat exchange on a refrigerant and the air. The outdoor fan 204 supplies the air to the outdoor heat exchanger 202. The compressor 205 compresses and circulates the refrigerant. The compressor 205 includes a compressor motor 208 having a permanent magnet synchronous motor. A motor drive device 207 drives the compressor motor 208 to drive the compressor. The motor drive device 207 converts an alternating voltage of the alternating-current source into a direct voltage and supplies it to the motor driving inverter to drive the motor.

Though a detailed structure is omitted, the compressor 205 is available as a rotary compressor or a scroll compressor and includes a compression mechanism inside. The compressor motor 208 drives the compression mechanism. The compression mechanism, if designed as a scroll compressor, includes a fixed scroll and an orbital scroll. The orbital scroll orbits eccentrically around the fixed scroll to form a compression chamber between the scrolls.

The use of the motor drive device according to Example 2 as the motor drive device 200 can suppress the distortion in a motor current and ensure a high control capability. Suppressing the motor current distortion can ensure more stable driving and reduce a vibration or a noise in the product as a refrigerator.

While there have been described the examples, the present invention is not limited to the examples and may include various modifications. For example, the abovementioned examples provide the detailed description in order to explain the invention in an easy-to-understand manner and the invention is not necessarily limited to all the configurations that have been described. The configuration of one example can be partly replaced by the configuration of another example. The configuration of one example can be additionally supplied with the configuration of another example.

Reference Signs List

1    alternating-current source,

2     noise filter,
3     reactor,
4     inverter circuit,
5     smoothing capacitor,
6     voltage detection means,
7     voltage-dividing resistor,
8     controller,
9     current detection means,
10    direct-load/direct-current power supply,
11    power supply phase arithmetic unit,
12    voltage controller,
13    3-phase/2-axis converter,
14    2-axis/3-phase converter,
15    harmonic suppressor,
16    PWM controller,
17    PI controller,
21    S controller,
22    d-axis harmonic suppressor,
23    q-axis harmonic suppressor,
24    characteristics,
31    current waveform,
32    d-axis voltage correction amount waveform,
33    q-axis voltage correction amount waveform,
41    alternating-current source,
42    rectification circuit,
43    smoothing capacitor,
44    inverter circuit,
45    motor,
46    controller,
47    current detection circuit,
48    direct voltage detection circuit,
50    speed controller,
51    d-axis current command generator,
52    voltage controller,
53    2-axis/3-phase converter,
54    speed-phase estimator,
55    3-phase/2-axis converter,
56    current reproduction arithmetic unit,
57    harmonic suppressor,
58    PWM controller,
61    axis error arithmetic unit,
62    speed estimator,
63    phase arithmetic unit,
64    motor constant,
71    U-phase current waveform

## Claims

1. A power conversion device that performs power conversion between an alternating-current source and one of a direct-current load and a direct-current power supply, comprising:

   an inverter circuit;
   current detection means for detecting an alternating current in the alternating-current source;
   a voltage controller that generates a command voltage for the inverter circuit based on an alternating-current signal detected by the current detection means; and
   a corrector that includes a gain corresponding to a specific frequency and corrects the command voltage based on the alternating-current signal,

wherein the corrector is configured to correct the command voltage after being output from the voltage controller.

2. The power conversion device according to claim 1,
   wherein the corrector uses a transfer function shown in the following equation.

[Math. 1]

$$G(s) = \frac{K_1 \cdot s^2 + K_2 \cdot s}{s^2 + K_3 \cdot s + \omega_0{}^2}$$

where s denotes a Laplace operator; $\omega_0$ denotes a center frequency; and $K_1$, $K_2$, and $K_3$ denote control gains.

3. The power conversion device according to claim 1 or 2,
   wherein a center frequency for the corrector is set based on a high-order component of an alternating-current signal detected by the current detection means.

4. The power conversion device according to claim 1 or 2,
   wherein a plurality of the correctors are used as well when a plurality of high-order components exist in an alternating-current signal detected by the current detection means.

5. A motor drive device having an inverter circuit to convert a direct voltage into an alternating voltage and current detection means for detecting an alternating current as output from the inverter circuit, the motor drive device comprising:

   a voltage controller that generates a command voltage for the inverter circuit based on an alternating-current signal detected by the current detection means; and
   a corrector that includes a gain corresponding to a specific frequency and corrects the command voltage based on the alternating-current signal,
   wherein the corrector is configured to correct the command voltage after being output from the voltage controller.

6. The motor drive device according to claim 5,
   wherein the corrector uses a transfer function shown in the following equation.

[Math. 2]

$$G(s) = \frac{K_1 \cdot s^2 + K_2 \cdot s}{s^2 + K_3 \cdot s + \omega_0{}^2}$$

where s denotes a Laplace operator; $\omega_0$ denotes a center frequency; and $K_1$, $K_2$, and $K_3$ denote control gains.

7. The motor drive device according to claim 5 or 6,
   wherein a center frequency for the corrector is set based on a high-order component of an alternating-current signal detected by the current detection means.

8. The motor drive device according to claim 5 or 6,
   wherein a plurality of the correctors are used as well when a plurality of high-order components exist in an alternating-current signal detected by the current detection means.

9. The motor drive device according to any one of claims 5 through 8,
   wherein axis error operation is performed on a command voltage output from the voltage controller before the command voltage is corrected.

10. A refrigerator having a compressor,

wherein the compressor includes a motor inside; and wherein the motor drive device according to any one of claims 5 through 9 is used to drive a motor included in the compressor.

FIG.1

# FIG.2

PWM SIGNAL

DIRECT VOLTAGE DETECTION SIGNAL

PWM CONTROLLER 16

8

Vu*
Vv*
Vw*

2-AXIS/3-PHASE CONVERTER 14

Vd*
Vq*

HARMONIC SUPPRESSOR 15

Vqh
Vdh

Vd
Vq

VOLTAGE CONTROLLER 12

$\theta_s$

Id
Iq

3-PHASE/2-AXIS CONVERTER 13

Id*
Iq*

CURRENT COMMAND

POWER SUPPLY PHASE ARITHMETIC UNIT 11

ALTERNATING VOLTAGE DETECTION SIGNAL

ALTERNATING CURRENT DETECTION SIGNAL

# F I G . 3

# F I G . 4

# FIG.5

(A)

$$\frac{K_1 \cdot s^2 + K_2 \cdot s}{s^2 + K_3 \cdot s + \omega_0{}^2}$$

21

s : LAPLACE OPERATOR

$\omega_0$ : CENTER FREQUENCY

$K_1$、$K_2$、$K_3$ : CONTROL GAIN

(B)

24

# FIG.6

EP 3 422 551 A1

# FIG.7

EP 3 422 551 A1

# FIG.8

EP 3 422 551 A1

# FIG.9

# FIG.10

# FIG.11

# FIG.12

## INTERNATIONAL SEARCH REPORT

| International application No. |
| --- |
| PCT/JP2016/087058 |

**A. CLASSIFICATION OF SUBJECT MATTER**
*H02M7/48*(2007.01)i, *H02M7/12*(2006.01)I, *F25B1/00*(2006.01)i

According to International Patent Classification (IPC) or to both national classification and IPC

**B. FIELDS SEARCHED**

Minimum documentation searched (classification system followed by classification symbols)
H02M7/48, H02M7/12, H02P21/00, H02P6/00, F25B1/00

Documentation searched other than minimum documentation to the extent that such documents are included in the fields searched
Jitsuyo Shinan Koho     1922-1996   Jitsuyo Shinan Toroku Koho   1996-2017
Kokai Jitsuyo Shinan Koho  1971-2017   Toroku Jitsuyo Shinan Koho   1994-2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>A | JP 2003-18900 A  (Nissan Motor Co., Ltd.),<br>17 January 2003 (17.01.2003),<br>paragraphs [0015] to [0030]; fig. 1<br>(Family: none) | 1,3-5,7-10<br>2,6 |
| A | JP 2014-138526 A  (Hitachi Appliances, Inc.),<br>28 July 2014 (28.07.2014),<br>paragraph [0024]; fig. 2<br>(Family: none) | 9 |
| A | JP 2010-206874 A  (Hitachi Appliances, Inc.),<br>16 September 2010 (16.09.2010),<br>abstract<br>(Family: none) | 10 |

☐ Further documents are listed in the continuation of Box C.      ☐ See patent family annex.

| | |
| --- | --- |
| \*    Special categories of cited documents:<br>"A"   document defining the general state of the art which is not considered    to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>   20 February 2017 (20.02.17) | Date of mailing of the international search report<br>   28 February 2017 (28.02.17) |
| --- | --- |
| Name and mailing address of the ISA/<br>   Japan Patent Office<br>   3-4-3,Kasumigaseki,Chiyoda-ku,<br>   Tokyo 100-8915,Japan | Authorized officer<br><br><br>Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5049707 B